# EUROPEAN PATENT APPLICATION

(11) **EP 4 552 826 A1**
(43) Date of publication of application: **14.05.2025**
(21) Application number: 23208901.1
(22) Date of filing: 09.11.2023
(51) Int. Cl.: B29C 64/106, B29C 64/209, B29C 64/321, B33Y 10/00, B33Y 30/00, B29C 48/37

(54) **A SYSTEM AND METHOD FOR EXTRUSION PRINTING**

(71) Applicant: VITO NV, 2400 Mol (BE)
(72) Inventor: MICHIELSEN, Bart, B-2400 Mol (BE); LEFEVERE, Jasper, B-2400 Mol (BE); BREUGELMANS, Jef, B-2400 Mol (BE)
(74) Representative: V.O.

(57) **Abstract**

An extrusion printing system configured to extrude a paste material through one or more nozzles, the extrusion printing system comprising a gear pump unit comprising a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the paste material, wherein the first lobes and the second lobes are structured and arranged such that they do not come into direct contact with each other and keep a minimum gap distance therebetween at any point throughout the rotation of the first and second gear elements during the pumping action.

## Description

### FIELD OF THE INVENTION

The invention relates to an extrusion printing system configured to extrude a build material through one or more nozzles. Furthermore, the invention relates to a method of extruding a paste material through an extrusion printing system. Additionally, the invention relates to a gear pump unit for use in an extrusion printing system, and the use thereof.

### BACKGROUND TO THE INVENTION

Extrusion printing is often used for creating three-dimensional objects. A wide variety of materials can be used with such extrusion printing systems. Some build materials, such as paste materials, used in the extrusion printing systems may pose technical challenges.

An important component of the extrusion printing system employing paste materials is the pumping mechanism, an element that determines the reliability and efficiency of material delivery through the designated nozzles. Gear pumps may be used for this purpose. A wide variety of gear pump designs are possible.

Wear and tear are intrinsic challenges when dealing with paste materials, especially those that contain abrasive particles. The continuous flow of these materials through the gear pump subjects the internal components to consistent friction. This is especially pronounced when the paste material contains solid particles or granules. These particles, depending on their size, hardness, and concentration, can accelerate the wear of the pump's internal surfaces, seals, and other critical components. Over time, this wear can lead to diminished pump efficiency, reduced precision in material delivery, and an overall decrease in the lifespan of the pumping mechanism. Ensuring consistent performance and longevity becomes increasingly challenging as the abrasive nature of certain paste materials takes a toll on the equipment.

Furthermore, clogging is another significant challenge associated with the use of paste materials in extrusion printing systems. The consistency and composition of paste materials can vary widely, with some being more viscous or laden with larger particles. When such materials are pumped through the nozzles, there's an inherent risk of these particles obstructing the flow, leading to clogs. Clogging not only disrupts the printing process but can also introduce inconsistencies in the printed object. This is particularly problematic when precision and detail are important. Furthermore, clogging often necessitates halting the printing process for maintenance and cleaning, leading to increased operational downtimes. Addressing clogging issues is vital to ensure the smooth operation of extrusion printing systems and the production of high-quality printed objects.

Therefore, the wear, exacerbated by the repetitive motion and sometimes abrasive nature of the paste materials, can lead to material flow inconsistencies, culminating in uneven extrusions. Additionally or alternatively, the internal architecture of the gear pumps can make them prone to clogging, especially when handling denser or particle-laden paste materials. Such clogs not only disrupted the printing process but also escalated maintenance requirements, leading to increased operational downtimes and elevated costs. Beyond the immediate operational challenges, clogs and wear collectively compromised the longevity of the entire extrusion system, posing economic inefficiencies.

There is a pressing need for a more robust design that can effectively reduce wear and tear. Additionally, there is a desire to have a design of an extrusion printing system that can enhance the consistency of its performance/output.

### SUMMARY OF THE INVENTION

It is an object of the invention to provide for a method and a system that obviates at least one of the above mentioned drawbacks.

Additionally or alternatively, it is an object of the present invention to provide for an extrusion printing system and method that improves the operational characteristics.

Additionally or alternatively, it is an object of the present invention to provide for an extrusion printing system and method that enhances the longevity and/or efficiency of the gear pump unit.

Additionally or alternatively, it is an object of the present invention to provide a versatile extrusion printing system that can be adapted to handle different paste materials.

Additionally or alternatively, it is an object of the invention to significantly reduce the risk of blockages in the extrusion printing process.

Additionally or alternatively, it is an object of the invention to provide a more constant quality of the extrusion printing process.

Thereto, the invention provides for an extrusion printing system configured to extrude a paste material through one or more nozzles, the extrusion printing system comprising a gear pump unit comprising a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the paste material, wherein the first lobes and the second lobes are structured and arranged such that they do not come into direct contact with each other and keep a minimum gap distance therebetween at any point throughout the rotation of the first and second gear elements during the pumping action.

The extrusion printing system is designed for the purpose of extruding paste material through one or more designated nozzles. The gear pump units comprise a first gear element with multiple first lobes which are disposed circumferentially around a designated first central axis, and a second gear element featuring a similar multiple second lobes which are disposed circumferentially around a second central axis. The lobes, while cooperating to enable an efficient pumping action of the paste material, are structured in such a manner that they never come into direct contact during any stage of their rotation. A minimum gap distance is diligently maintained between these lobes throughout the pumping action.

The lobes are precisely designed such that they facilitate a reliable pumping action of the paste material without coming into direct contact with each other. Notably, they maintain a minimum gap distance throughout their rotation during the pumping process. The technical advantage of this configuration is that it reduces the risk of wear and tear between the lobes, thus enhancing the lifespan and consistent performance of the extrusion system. This is achieved through the arrangement/placement and design of the lobes which prevent their direct collision during operation.

In some examples, the gear pump units are positioned proximate to the nozzle for immediate extrusion post pumping, or alternatively, it may be positioned at a distance, connected via tubing.

Optionally, the minimum gap distance is selected based on properties of the paste material to be pumped by the gear pump unit.

The determination of the minimum gap distance between the first and second lobes is not arbitrary. Instead, it is judiciously chosen based on specific properties inherent to the paste material that the gear pump unit is tasked with pumping. This meticulous selection ensures improved performance and mitigates potential complications that can arise during the extrusion process.

This adaptability ensures that the system can efficiently handle different paste materials with varying properties. The advantage here is that it offers flexibility and optimization for various applications, ensuring that the paste material flows smoothly without causing blockages. This is achieved by tailoring the minimum gap distance to the specific properties of the paste.

The term "inherent properties" underscores the characteristics of the paste material, which may encompass attributes such as viscosity, particle size, density, and other rheological properties. Each of these properties can significantly influence the flow dynamics and behavior of the paste material as it moves through the gear pump unit. By ensuring that the minimum gap distance is intrinsically aligned with these properties, the system is equipped to deliver a consistent and efficient pumping action that is uniquely tailored for the specific paste in use.

Advantageously, the system obtains an inherent resistance to blockages. By ensuring that the minimum gap distance is meticulously aligned with the properties of the paste, potential obstructions, which can arise due to the paste's flow behavior or particle interactions, can be effectively mitigated. For instance, a paste with higher viscosity may necessitate a different minimum gap distance compared to a more fluidic paste to ensure smooth flow. By catering to these nuances, the system ensures uninterrupted operations, thereby reducing downtimes and maintenance interventions.

Through the strategic selection of the minimum gap distance based on the inherent properties of the paste material, the present invention a harmonious synergy between the gear pump unit and the paste can be achieved. This results in a seamless extrusion process, optimized for various applications.

Optionally, the properties of the paste material include fluid properties such as viscosity.

Delving deeper into the specifics of the paste material properties, such properties may prominently include fluid characteristics. An exemplary fluid property taken into consideration is the viscosity and shear thinning properties of the paste material. This suggests that the gear pump unit's design and functionality are particularly tailored to handle varying viscosities, ensuring efficient and consistent pumping action.

Advantageously, a more precise and efficient pumping action is allowed, especially for pastes with unique viscosities. This advantage is achieved by ensuring that the gear pump unit is responsive to the flow dynamics of the paste, thereby preventing potential clogging and/or inconsistent extrusion.

Viscosity, in essence, refers to a fluid's resistance to shear or flow. It's a measure of how "thick" or "thin" a fluid is and plays a pivotal role in determining how a material will behave when subjected to pumping and/or extrusion. Different paste materials can exhibit a wide spectrum of viscosities, from being highly viscous (thick and resistant to flow) to being low in viscosity (thin and easily flowing). Recognizing this variability, the present invention places a distinct emphasis on viscosity as a key determinant for adjusting the minimum gap distance. The system's design showcases an acute sensitivity to the flow characteristics of the paste material. Rather than being a passive component in the design, the gear pump unit is selected such as to accurately align its operational parameters with the viscosity of the paste. By actively accounting for the viscosity of the paste, the gear pump unit can deliver a pumping action that is both precise and efficient. For instance, a highly viscous paste may necessitate a specific minimum gap distance to ensure that it is pumped effectively without exerting undue strain on the system. Conversely, a less viscous paste may flow too rapidly if not regulated correctly, leading to potential inconsistent extrusion rates. By tailoring the minimum gap distance to these unique viscosities, the system ensures that the paste is pumped at an optimal rate, maximizing throughput while minimizing potential disruptions.

Moreover, by being attuned to the flow dynamics of the paste, the system exhibits a robust defense mechanism against potential operational challenges. One of the most common challenges in extrusion systems is clogging, especially when dealing with pastes that have unique flow behaviors. However, by ensuring that the minimum gap distance is in harmony with the paste's viscosity, the system effectively mitigates the risk of clogs. This not only ensures consistent extrusion but also prolongs the operational lifespan of the system by reducing wear and tear.

Optionally, the minimum gap distance is selected based on a size of particles in the paste material to be pumped by the gear pump unit.

There may be further criteria for determining the minimum gap distance. In some examples, additionally or alternatively, physical characteristics of the paste material are considered. Specifically, the size of particles present in the paste material can be an important factor in determining the appropriate minimum gap distance in the gear pump unit, ensuring that the extrusion process is both smooth and efficient.

The minimum gap distance in the extrusion printing system being determined based on the particle size within the paste material intended for pumping can effectively ensure that particles within the paste do not obstruct or interfere with the gear pump unit's operation. Advantageously, a reduction in the chances of blockages and enhanced operational efficiency can be obtained. This is achieved by keeping the minimum gap distance larger than the particle size, ensuring smooth passage of the paste. In such examples, the paste used has a granular composition, which can greatly influence the extrusion process.

The term "particle size" pertains to the dimensions or magnitude of individual particles or granules suspended or embedded within the paste material. These particles can vary widely in size, depending on the specific formulation or application of the paste. For instance, a ceramic paste may contain tiny ceramic particles, while a metallic paste may have minute metal granules. Given their presence, it becomes imperative for the extrusion system to account for these particles, ensuring that they do not hinder or impede the system's operation.

By ensuring that the minimum gap distance is consistently larger than the largest particle present in the paste, the system proactively mitigates the risk of these particles causing obstructions. This is an important consideration, especially when dealing with pastes that have high particle concentrations or particularly large particle sizes. If not accounted for, these particles can potentially cause blockages, leading to operational disruptions, increased wear and tear, and reduced system efficiency.

By preemptively addressing the challenge of particle-induced obstructions, the system enjoys a tangible reduction in blockage incidents. This not only ensures smoother operations but also translates to reduced downtime and maintenance interventions. Furthermore, by tailoring the minimum gap distance to the particle size, the system achieves enhanced operational efficiency. The paste flows seamlessly through the gear pump unit, with particles effortlessly navigating through the gap, leading to consistent and optimal extrusion rates.

Particles, if trapped or obstructed due to inadequate minimum gap distances, can exert undue frictional forces on the gear pump unit, accelerating wear. However, by ensuring a gap larger than the particle size, this frictional interaction is minimized, thereby prolonging the operational lifespan of the system. Thus, the system according to the disclosure can ensure a seamless, efficient, and durable extrusion process.

Optionally, the minimum gap distance is larger than the size of particles in the paste material, and smaller than a nozzle size of one or more nozzles of the extrusion printing system that are in fluid connection with the gear pump unit.

The chosen minimum gap distance may have a dual constraint. Firstly, this distance is always greater than the size of the particles in the paste material, ensuring unobstructed flow. Secondly, this distance remains smaller than the size of the nozzles connected to the gear pump unit. This meticulous balance ensures that the paste material is effectively transported and extruded, maximizing system efficiency.

The dual consideration of ensuring that the minimum gap distance is not only larger than the particle size within the paste material but also smaller than the nozzle size of the extrusion printing system connected to the gear pump unit, can effectively provide for a harmonized flow rate and extrusion efficiency. Advantageously, an enhanced extrusion process with reduced chances of nozzle clogging can be obtained while maintaining consistent output. This benefit is achieved by striking a balance between the gear unit's design and the nozzle's specifications.

The nozzle, serving as the exit point for the paste material, plays an important role in determining the final extrusion quality. Its size directly influences the flow rate, deposition accuracy, and overall output quality. Simultaneously, the presence of particles in the paste material can introduce complexities to the extrusion process. These particles, depending on their size, can either flow smoothly through the nozzle or potentially obstruct it, leading to inconsistent extrusion or even clogging. In light of these considerations, the system according to the disclosure adopts a balanced approach. Firstly, it ensures that the minimum gap distance within the gear pump unit is larger than the particle size. This design choice ensures that the particles within the paste do not obstruct or hinder the pump unit's operation. However, the system goes a step further by also ensuring that this minimum gap distance is smaller than the nozzle size. This is an important consideration as a gap too large, while allowing easy passage of particles, may lead to inconsistent/irregular flow rates due to the rapid flow of the paste material through the nozzle(s).

By ensuring that the minimum gap distance is calibrated between the particle size and the nozzle size, the system strikes a harmonious balance. This results in a consistent flow rate that matches the nozzle's specifications, leading to precise and efficient extrusion. An immediate benefit is the significant improvement of the extrusion process. With the minimum gap distance tailored to both the particle size and nozzle size, the system ensures that the paste flows at a rate that is neither too fast (which can lead to irregular/uneven deposition) nor too slow (which can reduce throughput). Furthermore, by ensuring that particles can pass through the gear pump unit but are then channeled efficiently through the nozzle, the system significantly reduces the chances of nozzle clogging. This not only ensures consistent output but also reduces maintenance interventions and prolongs the nozzle's operational lifespan.

Optionally, the minimum gap distance is in a range of 10 to 250 micrometer.

In some examples, the minimum gap distance is specifically chosen to lie within a range of 10 to 250 micrometers. This range has been identified as important for ensuring a balance between efficient pumping action and reduced wear between the lobes for various exemplary existing paste materials. A longer gear pump lifespan and reduced maintenance requirements can be obtained, achieved by maintaining a minimum gap distance that is neither too small to cause wear nor too large to compromise the pumping efficiency.

The specified range represents a sweet spot in the design spectrum. On the one hand, if the minimum gap distance were too small, even if it exceeded the size of the particles in the paste material, it can result in increased friction between the lobes of the gear pump unit. Such friction is detrimental for multiple reasons. Firstly, it can cause excessive wear and tear on the lobes, which would necessitate frequent replacements or maintenance interventions. Additionally, the heat generated from this friction can potentially alter the properties of the paste material, leading to inconsistent extrusion or even damage to the system components.

On the other hand, if the minimum gap distance were excessively large, it can compromise the efficiency of the pumping action. A larger gap may allow the paste material to flow too freely, leading to potential irregular deposition, uneven deposition, and the like. Additionally, a gap too wide can potentially reduce the precision of the extrusion, particularly in applications where fine detail or accuracy is important.

Optionally, each of the first and second lobes features an ellipsoid design, shaped to obtain a steady minimum gap distance, wherein the minimum gap distance remains substantially constant during a defined angular segment of the continuous rotation of the first and second gear element.

Both the first and second lobes adopt an ellipsoid design. Importantly, this design is functional, aiming to maintain a steady minimum gap distance. During a defined angular segment of the continuous rotation of the gear elements, this gap remains substantially constant, ensuring consistent performance.

The design of the lobes is shaped to preserve a steady minimum gap distance. This ensures that during a specific angular segment of the continuous rotation, the gap remains substantially constant (or within a relatively small range). The technical effect of this design choice is significantly smoother pumping action with reduced pulsation and/or wear. This is achieved through the geometric precision of the ellipsoid shape which ensures a consistent gap throughout its rotation.

The ellipsoid offers unique geometric advantages in the context of the gear pump unit's operation. As the lobes rotate and engage with each other during the pumping action, the ellipsoid shape ensures that the minimum gap distance remains remarkably consistent, especially during specific angular segments of their continuous rotation. This is in contrast to other potential shapes (e.g. circular) that may lead to variable gap distances as the lobes rotate, causing inconsistencies in the pumping action.

As the lobes rotate and interact, the ellipsoidal shape can ensure that the paste material experiences a steady and uniform flow, devoid of sudden surges or drops in pressure. This results in a consistent extrusion rate, which is particularly beneficial for applications that demand precision and uniformity.

Furthermore, the ellipsoid design plays an important role in reducing pulsation. Pulsation, or the cyclic variation in flow rate, can be detrimental to the extrusion process, leading to uneven deposition and/or even compromised structural integrity of the extruded material. By maintaining a consistent minimum gap distance throughout the rotation, the ellipsoid design mitigates these pulsations, ensuring that the flow remains steady and predictable.

Also, the ellipsoidal shape indirectly contributes to reduced wear and tear on the gear elements. By maintaining a steady minimum gap distance, an improved fluid pressure characteristic may be obtained, reducing potentially associated wear. This not only can effectively prolong the lifespan of the gear elements but also can ensure that the system remains operational for extended durations without significant performance degradation.

Optionally, an ellipsoid portion of each lobe is complemented with a circular portion defining the valleys between adjacent lobes.

Each ellipsoid segment of a lobe can be complemented with an adjoining circular portion. This circular portion serves to define the valleys between adjacent lobes, ensuring seamless operation and efficient pumping action.

The interplay between two distinct portions of the lobes is highlighted: the ellipsoid and the circular. This dual geometry serves an important role in optimizing the flow dynamics of the paste material within the gear pump unit.

The ellipsoid portion ensures a consistent minimum gap distance during specific angular segments of the lobe's rotation. The circular portion, positioned to define the valleys or recesses between adjacent lobes, facilitates the smooth transition and flow of the paste material as it navigates the contours of the rotating gear elements.

The combination of these two geometric portions - can further improve obtaining a steady/consistent minimum gap distance during operation. The interplay between the ellipsoid and circular portions ensures that the paste material can flow at a more consistent rate, devoid of sudden surges or drops. This translates to a uniform extrusion rate, which is important for applications that demand precision and consistency.

Optionally, the first and second gear elements comprise at least 6 lobes, preferably at least 8 lobes, even more preferably at least 10 lobes.

In some examples, both the first and second gear elements should possess a minimum of 6 lobes. For enhanced performance, at least 8 lobes, and even more, such as at least 10 lobes may be recommended. This variation ensures adaptability and scalability of the design. Co-operating gear elements can have the same number of lobes (forming protrusions and valleys).

This increased number of lobes can ensure a more consistent and continuous flow of the paste material. The technical advantage is a smoother extrusion process with less pulsation, achieved by having multiple lobes engage with the paste material at any given time.

Optionally, the gear pump unit includes a synchronization unit for synchronizing movement of a first shaft and a second shaft connected to the first gear element and the second gear element, respectively.

In some examples, a synchronization unit within the gear pump assembly is introduced. This unit plays a crucial role in synchronizing the movements of the first and second shafts, which are directly connected to the first and second gear elements, respectively. Such synchronization ensures harmonious operation, preventing any misalignment or asynchronous movements that can hinder the pumping action. In this way, it is not needed that lobes of the first and second gear elements contact each other during operation, such as for instance, a first gear element driving a second gear element, and/or vice versa.

The synchronization unit can effectively prevent misalignment or desynchronization issues, ensuring a smooth and consistent pumping action, whilst avoiding contact between the lobes of the first and second gear elements. This is achieved by controlling the rotational movement of both gear elements in tandem.

The synchronization unit may be an integral part of the gear pump units, or, alternatively, it may be operationally connected to the shafts of the gear pump units. In some examples, a single synchronization unit is provided that synchronizes two shafts that is used for driving gear elements of multiple gear pump units.

The synchronization unit can be configured to regulate and synchronize the movement of the first and second shafts. Their coordinated movement is paramount to ensure that the gear elements (contactless) interact smoothly, maintain the desired minimum gap distance, and facilitate the flow of the paste material without interruptions.

Misalignment for example can be prevented, which can cause the gear elements to come into contact, leading to excessive wear and potential damage. Desynchronization, on the other hand, can lead to inconsistent flow rates, pulsation, or even blockages, as the gear elements may not maintain the desired minimum gap distance consistently.

The synchronization unit can ensure a smooth and consistent pumping action. By regulating the movement of the shafts, the synchronization unit ensures that the gear elements engage and rotate in perfect harmony. This results in a steady flow rate, devoid of sudden surges or drops, ensuring precise extrusion. Furthermore, the synchronization unit plays an important role in prolonging the lifespan of the gear pump unit. By preventing misalignment and ensuring coordinated movement, the unit reduces wear and tear on the gear elements. This not only reduces maintenance interventions but also ensures that the system remains operational for extended durations without significant performance degradation. Additionally, the synchronization unit indirectly contributes to the system's efficiency. By ensuring that the gear elements rotate in tandem, the system can optimize the flow rate, reducing energy consumption and ensuring optimal throughput.

In some examples, the synchronization unit is provided with a mechanical linkage to ensure harmonized movement between the first and second gear elements. Additionally or alternatively, the synchronization unit may perform synchronization of the shafts by means of a (digital) control system.

Optionally, the minimum gap is configured to facilitate backflow at a predetermined pressure level, serving as an overpressure protection system.

Optionally, the gear pump unit is configured such that the minimum gap distance is adjustable.

Advantageously, the flexibility of the system can be significantly improved. The extrusion printing systems may be employed in various applications, each requiring different paste materials with distinct properties. Rather than adopting a one-size-fits-all approach, the present invention emphasizes a modular design strategy may be employed in some examples. By allowing adjustments to the minimum gap distance based on the paste's properties, the system can be finely tuned to optimize performance for any given application. This not only enhances the system's versatility but also its overall efficiency and reliability.

Optionally, the second central axis is parallel to the first central axis.

Optionally, replaceable wear plates are provided at walls within the gear pump.

According to an aspect, the invention provides for a method of extruding a paste material through an extrusion printing system, the system being provided with one or more nozzles configured to extrude a paste material and a gear pump unit with a first gear element having a plurality of first lobes disposed circumferentially around a first central axis, and a second gear element having a plurality of second lobes disposed circumferentially around a second central axis, wherein the first and second gear elements are rotated around their respective central axes to transport the paste material through the gear pump unit, and wherein a minimum gap distance is maintained between the first lobes and the second lobes throughout the rotation of the first and second gear elements, wherein the minimum gap distance prevents direct contact between the first and second lobes at any point during a pumping action, and wherein the paste material is guided through one or more nozzles of the extrusion printing system to facilitate the extrusion of the paste material.

The gear pump unit, with its first and second gear elements, rotates around their respective central axes. This rotation facilitates the transportation of the paste material through the unit. The consistent maintenance of a minimum gap distance between the lobes during rotation ensures an improved operation. This minimum gap prevents any direct contact between the lobes, ensuring smooth transportation and extrusion of the paste material through the system's nozzles. A maintained minimum gap distance ensures that the lobes never come into direct contact, preventing wear.

In some examples, the protruding parts of the lobes may have an ellipsoid design. Such an ellipsoid design is one such geometry/shape for ensure that the gap remains substantially uniform over a specific rotational segment. However, other variations may be employed.

Optionally, the used paste material includes particles, and wherein the minimum gap distance is selected based on a size of the particles within the used paste material.

The paste material used can contain particles. The minimum gap distance in the gear pump unit can be adjusted based on the size of these particles, ensuring the method's adaptability to different paste materials and ensuring efficient extrusion. The minimum gap distance is advantageously chosen based on these particle sizes, ensuring a blockage-free operation. The technical advantage is the prevention of particle-induced clogs, achieved by tailoring the minimum gap distance to the particle size.

In some examples, pre-filtering the paste is performed in order to ensure uniform particle size. In some examples, one or more in-line sensors are employed to monitor particle size.

Optionally, the minimum gap distance is chosen to be at least 3 times the 90th percentile of particle diameter in the used paste material (D90), and preferably at least 5 times.

In some examples, a specific criterion for selecting the minimum gap distance is employed. This distance can be chosen to be at least three times the 90th percentile of particle diameter (D90) in the used paste material. For optimal performance in some examples, it can be recommended to be at least five times the D90 value, ensuring both safety and efficiency in the extrusion process.

This specification ensures a buffer zone that significantly reduces the chances of blockages, resulting in an improved extrusion process with minimal downtime.

The 90th percentile of particle diameter essentially means that 90% of the particles within the paste material have a diameter that is equal to or smaller than this value. By setting the minimum gap distance to be at least three times this diameter, and even suggesting a preference for it to be five times, the system ensures a significant buffer zone. This buffer is crucial as it provides ample space for the particles to move freely without coming into close contact with the gear elements, thus drastically reducing the chances of blockages.

By ensuring that the minimum gap distance is set to be significantly larger than the majority of particles in the paste, the system mitigates the risk of these particles causing obstructions. This is particularly crucial when dealing with pastes that have high particle concentrations or larger particle sizes. Blockages can lead to operational disruptions, increased wear and tear, reduced system efficiency, and even potential damage to the system components. By preemptively addressing this challenge through the specified buffer, the system enjoys a tangible reduction in blockage incidents.

The system can deliver a consistent and high-quality extrusion. The buffer ensures that the paste flows smoothly, devoid of sudden stops or interruptions due to blockages. This results in consistent extrusion rates, which are particularly beneficial for applications that demand precision and uniformity. Furthermore, by reducing the chances of blockages, the system experiences reduced downtime, leading to higher operational efficiency. In the long run, the reduced wear and tear on the gear elements, owing to the minimized blockages, translates to fewer maintenance interventions. This leads to cost savings, reduced downtimes, and a prolonged operational lifespan of the system.

In some examples, the paste may be pre-analyzed using a measurement technique such as laser diffraction. Various other techniques may be used, such as for instance ultrasonic sensors configured for measuring particle sizes in the paste.

According to an aspect, the invention provides for a gear pump unit for use in an extrusion printing system according to the disclosure.

A standalone gear pump unit may be employed as a module in the system. This unit can be designed and arranged for integration into the extrusion printing system. The unit encapsulates the advantageous design and functioning, making it an important component of the entire system.

The gear pump unit can be designed as a standalone module. In some embodiments, this unit may be modular and swappable, allowing for quick replacements or upgrades. In other variations, the gear pump unit may be integrated with additional systems like heating or cooling units to optimize paste material properties (e.g. viscosity, flow characteristics, etc.) during extrusion.

It will be appreciated that any of the aspects, features and options described in view of the system apply equally to the method and the described gear pump unit, device(s) and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of a cross-sectional view of exemplary lobes of gear pump units of an exemplary embodiment of an extrusion printing system.
Fig. 2 shows a schematic diagram of a cross-sectional view of exemplary gear element;
Fig. 3 shows a schematic diagram of a cross-sectional view of an embodiment of an extrusion printing system; and
Fig. 4 shows a schematic diagram of a cross-sectional perspective view of an embodiment of an extrusion printing system.

### DETAILED DESCRIPTION

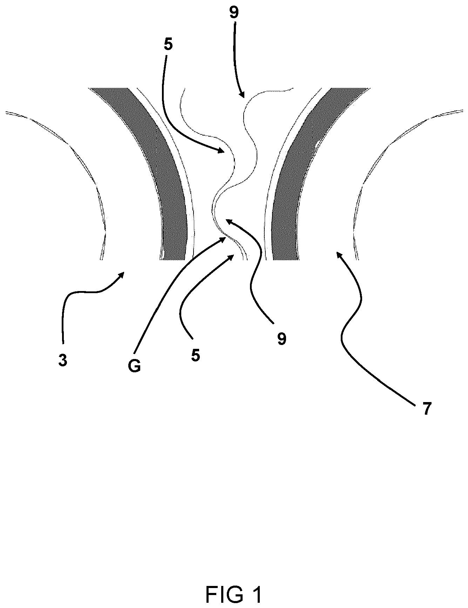

Fig. 1 shows a schematic diagram of a cross-sectional view of exemplary lobes of a gear pump unit of an embodiment of an extrusion printing system. The system is configured to extrude a paste material through one or more nozzles, the extrusion printing system comprising a gear pump unit comprising a first gear element 3 having a plurality of first lobes 5 disposed circumferentially around a first central axis, and a second gear element 7 having a plurality of second lobes 9 disposed circumferentially around a second central axis, wherein the first lobes 5 are configured to cooperate with the second lobes 9 to facilitate a pumping action of the paste material. The first lobes 5 and the second lobes 9 are structured and arranged such that they do not come into direct contact with each other and keep a minimum gap distance G therebetween at any point throughout the rotation of the first and second gear elements 3, 7 during the pumping action.

Advantageously, the first and second gear elements 3, 7, are designed such that they never touch each other, maintaining a specific minimum gap distance G throughout their rotation, thereby effectively preventing obstructions due to the viscous paste material. Moreover, considering the abrasive nature of certain paste materials (e.g. having solid particles therein), this design significantly reduces wear between the movement planes when an appropriate minimum gap distance is provided.

The first gear element 3 features multiple projections or extensions termed as the first lobes 5. These lobes are strategically arranged in a circle around a central point, referred to as the first central axis. Similarly, there's a second gear element 7 that also has its set of projections or extensions, known as the second lobes 9. These second lobes are similarly arranged in a circular pattern around their unique central point, named the second central axis. The interaction between these two sets of lobes for the gear pump unit provides for a pumping action. The first lobes 5 are specifically designed to work in tandem with the second lobes 9. When these two sets of lobes come into close proximity with each other, they produce a pumping action. This action provides for the movement or extrusion of the build material through the system. The combined actions and interactions of these lobes facilitate the effective pumping and flow of the build material in the extrusion printing system.

There is no direct contact between the first lobes 5 and the second lobes 9. A relatively small gap distance is maintained at the closest proximity therebetween.

In some examples, the build material is a high-viscosity paste material. In some examples, the paste includes solid or powder particles. In some examples, unlike conventional designs where gears drive each other, the invention employs a gear pump with a gear box to achieve synchronization of the shafts. In this way, contact can be prevented, and the lobes can maintain a predetermined minimal gap throughout their rotation without necessarily making contact. Given that force transmission is not an inherent requirement, the lobes can be miniaturized, promoting a more homogeneous flow. This also enables for experimenting with diverse lobe shapes and configurations to minimize abrasion and potential blockages.

In some examples, the system is provided with a gear set (cf. synchronization unit) specifically configured to synchronize two opposing rotation shafts. Here, one shaft acts as the primary driver, while the other follows suit through the gear set. Crucially, the lobes in this design don't exert force upon one another; their synchronization is solely orchestrated by the gear set connected to the rotating shafts.

A common challenge with multiple nozzles is the unequal distribution of material if one nozzle experiences a blockage. This is addressed by introducing a minimal gap distance between the lobes, facilitating minor leakage. This controlled leakage ensures that blockages have a diminished impact on material distribution.

In some examples, at least 6 lobes, preferably at least 8 lobes, are provided per gear element. In this way, ripple during extrusion can be reduced, ensuring a more controlled and refined extrusion process. The design of the lobes, their flow rates, and sealing surfaces are important parameters. Larger lobes can result in excessive stretch and leakage. On the other hand, having too many lobes might make the design flat, posing challenges in achieving adequate leakage. The number of lobes can be chosen to facilitate improved paste material transport. In some examples, each lobe adopts an ellipsoidal design, maintaining a consistent leakage distance. The volume extruded is contingent upon the meshing of these ellipsoids, enabling continuous volume displacement.

In some examples, the minimum gap distance is chosen/selected based on the grain size in the paste material. In some examples, the minimum gap distance between the lobes always supersedes the grain size. Ideally, this distance should be at least 3 times (preferably 5x or even 10x) the D90 value of the grain size distribution, ensuring reduced abrasion. If the gap is too large, there's a risk of excessive paste material leakage. Yet, the lobes need to interact adequately for pressure build-up, which is also influenced by the paste material's viscosity. As a guideline, the maximum range should ensure the minimum gap is larger than the particle size but smaller than the nozzle size, ideally lying between 10 to 250 micron for various exemplary embodiments.

The geometry of the lobes can vary; for instance, smaller nozzles may result in the arrangement of smaller lobes. The lobe size may for instance be determined by the desired extrusion amount and the interplay between the total radius of the axis (lobe axis) and the radius of the lobe itself. The ratio between these radii can play an important role in the configuration of the lobes.

The nozzle size can directly influence the volume of paste material that each lobe transports. For larger nozzles, each lobe can transport a more substantial volume, whereas smaller nozzles necessitate a reduced volume per lobe to ensure precise extrusion. This design attribute ensures a consistent and homogeneous flow, improving the extrusion process.

The diameter of the gear may be primarily determined by the torque required to be transmitted to the shafts. For instance, configurations with multiple nozzles in sequence may demand a more robust shaft for torque transmission, leading to a larger gear. This larger gear, in turn, facilitates more lobes. However, an increase in gear size implies a reduced rotation speed to maintain the same extrusion volume, given the larger circumference. Hence, the lobe dimensions can be intricately tied to the nozzle's specifications.

In some examples, the lobes design is a combination of an ellipse and a tangent circle. This design is particularly chosen to maintain a consistent gap throughout the lobe's rotation. The elliptical shape ensures that the shortest distance between the lobes remains nearly constant throughout the rotation. Without this elliptical design, the lobes would likely make contact at certain points during rotation, impeding the extrusion process. The specific shape of the ellipse can be influenced by the gear shaft's diameter and the lobe size. The peaks, or convex portions, of the lobe may be configured to adopt an elliptical form, while the troughs are circular, ensuring a more consistent gap throughout the rotation.

Such lobe design, with its intricate balance between the number of lobes, their geometry, and their interaction with the nozzle configuration, provides for a 3D printing extrusion system with improved precision, efficiency, and/or reliability.

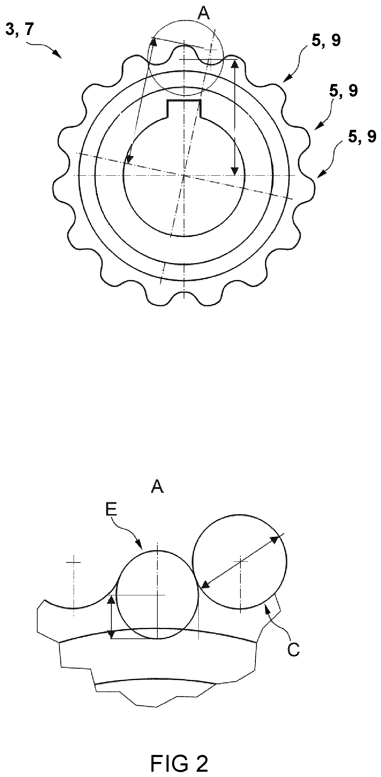

Fig. 2 shows a schematic diagram of a cross-sectional view of exemplary gear element 3, 7. In this example, the gear element 13 includes a relatively large number of lobes 5, 9, namely fifteen lobes. It is found that for more than six lobes, preferably more than seven lobes, even more preferably more than ten lobes, the interaction of the lobes with the build material in the feed channel 11 can be improved, at least for some examples.

In the shown example, each lobe features an ellipsoid design, wherein an ellipsoid portion E of each lobe is complemented with a circular portion C defining the valleys between adjacent lobes/mountains. Such design characteristic enables to better maintain a minimum distance between lobes of the first and second gear elements when they are in close proximity to each other. This can have significant benefits for the operation of the gear pump units.

It will be appreciated that the exemplary dimensions are not restrictive for the claimed invention. They are merely provided as an example.

It will be appreciated that the gear pump system can be configured to handle particle-loaded pastes. The particle size within the paste is meticulously chosen to be substantially smaller than the distance between gears. For example, the system may employ a minimum gap distance around 50 micron to mitigate gear abrasion and reduce particle degradation.

It will be appreciated that the system can handle a wide range of paste materials, from viscous liquids such as molten polymers to particle-loaded pastes like concrete. This versatility ensures adaptability to diverse extrusion printing applications.

It will be appreciated that, in the context of the present disclosure, the term "build material" is to be broadly understood as any material that can be extruded and is suitable for use in the described extrusion printing system. The specific properties, such as viscosity, flow rate, melting temperature, and others, of the build material may vary and can be selected based on the specific application or desired end product.

It will be appreciated that the system may integrate wear plates made from materials distinct from the housing. The plates' thickness may play an important role in determining the paste volume that the gears can transport. Additionally, these plates enhance the paste's shielding towards the shaft. The plates may also feature channels, enabling an alternate flow option for the paste beyond the traditional flow between the teeth.

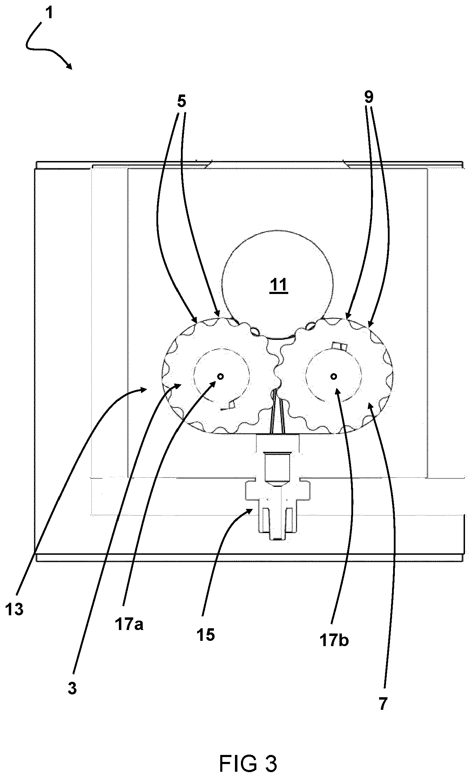

Fig. 3 shows a schematic diagram of a cross-sectional view of an embodiment of an extrusion printing system 1. In this example, the system 1 includes a feed channel 11 that feeds paste material to the gear pump unit 13. A nozzle 15 is provided for extrusion of build material. Furthermore, the first gear element 3 has first lobes 5 disposed circumferentially around a first central axis 17a, and the second gear element 7 has second lobes 9 disposed circumferentially around a second central axis 17b.

It will be appreciated that the design of the lobes can be important for the performance of the system. If they were more peak-like or toothy, the extrusion may not be as uniform. Thus, the lobes' design ensures that the paste material's extrusion through the nozzles 15 is more even and consistent.

In this example, the nozzle is detachably connected to the gear pump unit 13. In this way, the nozzles 15 can be suitable selected based on i.a. the build material that is used and/or the desired extrusion characteristics. However, it is also envisaged to use non-detachable nozzles 15 that are for example integrated with the gear pump unit(s) 13. It is possible to use more than one nozzle 15 per gear pump unit. In some examples, a pair of two nozzles are used per gear pump unit. However, the use of a different number of nozzles 15 is also possible.

The nozzle 15 can be affixed using threading. This feature offers a practical advantage; if a nozzle 15 becomes clogged or obstructed, it can be easily detached and addressed. The threading is designed at the bottom, allowing nozzles 15 to be easily screwed on or off, indicating the presence of detachable nozzles. Other embodiments are also possible. Thus, the nozzles 15 can be disconnected or "uncoupled" from the gear pump units, offering flexibility in maintenance and operation.

While a single threaded hole is a common configuration, the design allows for two threaded holes, facilitating the attachment of two nozzles to each gear pump. The positioning of these nozzles is versatile. They can be for example centered right beneath the gear mechanisms, but various other configurations are possible. The exemplary dual-nozzle setup can effectively double the output, providing improved parallel printing efficiency.

The extrusion printing system 1 can better handle transport of viscous paste materials to printing nozzles. This is achieved by the improved design of the gear pump unit within the system, ensuring a consistent and smooth flow of the paste material. A pair of gears, each equipped with specially designed lobe-shaped teeth are used. The rotation of both gears can be synchronized. These gears are not only designed to rotate in harmony but are also driven simultaneously, ensuring a seamless operation. The gears are strategically spaced apart, allowing a clear pathway for the paste transport. As they rotate, the gears turn outwards, capturing the paste and compressing it. This compression facilitates the removal of the paste at the bottom. The spacing between the gears is meticulously designed to ensure that their teeth or lobes never come into direct contact. Traditional gears often come with standard teeth, which can pose challenges when handling viscous pastes. To mitigate this, the gears in this system are equipped with rounded lobes. The contactless interaction of these lobes determines the quantity of paste extruded. By adopting this rounded design, the system significantly reduces pulsation, leading to a regular and consistent supply of paste to the nozzle. This design innovation minimizes the risk of errors in 3D printed structures, notably reducing the occurrence of ridges on extruded filaments.

The minimum gap distance can prevent clogging or blockage. In scenarios where the gears face blockage, the paste can be transported upwards via the center, preventing any disruption in the paste supply. This design becomes especially beneficial when using pastes embedded with material particles. Utilizing lobes over traditional teeth ensures that these particles remain intact, preventing them from breaking or getting reduced during the extrusion process.

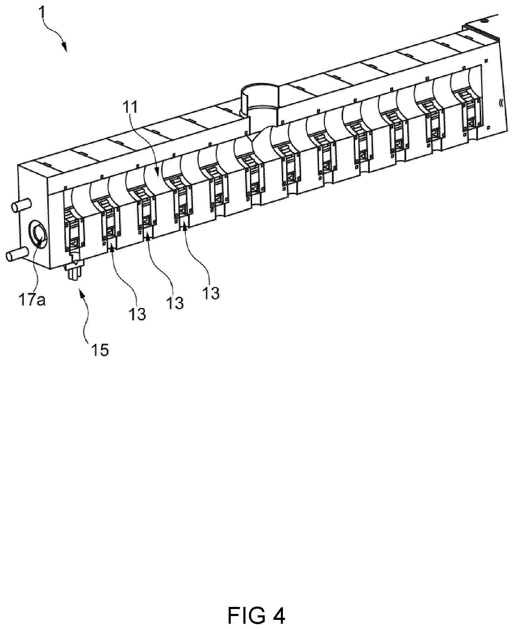

Fig. 4 shows a schematic diagram of a cross-sectional perspective view of an embodiment of an exemplary extrusion printing system 1. The system 1 provides for a gear pump array with a feed channel system with a common feed channel 11. The gear pump units are arranged/positioned sequentially. In this example, the feed channel, which is positioned perpendicular to the gear pump's inflow, ensures a steady and consistent delivery of the paste material across the different gear pump units. The system also integrates one or more nozzles that directly connect to each of these gear pump units.

A relatively broad channel is provided to transport the paste material to various gear pump units 13 that connect to nozzles 15. The build material (e.g. paste material) inherently has a specific viscosity. However, by maintaining a minimum gap distance, the operation of the gear pump unit can be enhanced. In various examples, this minimum gap distance is selected based on one or more properties of the paste material, and/or characteristics of solid particles therein.

The feed channel 11 can be arranged to cater to multiple gear pump units 13. In this example, multiple gear pump units 3 are sequentially arranged, all supplied by a central feeding channel 11 dedicated to the paste material. These gear pump units 13 may be directly connected to the nozzles 15. Gear pump units 3 can be designed to consistently dispense the build material, maintaining a uniform volumetric flow. However, the properties of the build material can introduce challenges. For example, if the paste has irregularities or inhomogeneities, there's a risk that a nozzle 15 may get obstructed. In situations where one nozzle connected to a gear pump unit gets blocked, it may compromise the performance of its companion nozzle on the same gear pump. In some examples, in order to ensure consistent flow to multiple nozzles, the gear pump units are configured to delay the separation of channels. This can for instance be done by means of a buffer chamber right before the paste material diverges into separate nozzles.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. An extrusion printing system configured to extrude a paste material through one or more nozzles, the extrusion printing system comprising a gear pump unit comprising a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the paste material, wherein the first lobes and the second lobes are structured and arranged such that they do not come into direct contact with each other and keep a minimum gap distance therebetween at any point throughout the rotation of the first and second gear elements during the pumping action.

2. The extrusion printing system according to claim 1, wherein the minimum gap distance is selected based on properties of the paste material to be pumped by the gear pump unit.

3. The extrusion printing system according to claim 2, wherein the properties of the paste material include fluid properties such as viscosity.

4. The extrusion printing system according to any one of the preceding claims, wherein the minimum gap distance is selected based on a size of particles in the paste material to be pumped by the gear pump unit.

5. The extrusion printing system according to claim 4, wherein the minimum gap distance is larger than the size of particles in the paste material, and smaller than a nozzle size of one or more nozzles of the extrusion printing system that are in fluid connection with the gear pump unit.

6. The extrusion printing system according to any one of the preceding claims, wherein the minimum gap distance is in a range of 10 to 250 micrometer.

7. The extrusion printing system according to any one of the preceding claims, wherein each of the first and second lobes features an ellipsoid design, shaped to obtain a steady minimum gap distance, wherein the minimum gap distance remains substantially constant during a defined angular segment of the continuous rotation of the first and second gear element.

8. The extrusion printing system according to claim 7, wherein an ellipsoid portion of each lobe is complemented with a circular portion defining the valleys between adjacent lobes.

9. The extrusion printing system according to any one of the preceding claims, wherein the first and second gear elements comprise at least 6 lobes, preferably at least 8 lobes, even more preferably at least 10 lobes.

10. The extrusion printing system according to any one of the preceding claims, wherein the gear pump unit includes a synchronization unit for synchronizing movement of a first shaft and a second shaft connected to the first gear element and the second gear element, respectively.

11. A method of extruding a paste material through an extrusion printing system, the system being provided with one or more nozzles configured to extrude a paste material and a gear pump unit with a first gear element having a plurality of first lobes disposed circumferentially around a first central axis, and a second gear element having a plurality of second lobes disposed circumferentially around a second central axis, wherein the first and second gear elements are rotated around their respective central axes to transport the paste material through the gear pump unit, and wherein a minimum gap distance is maintained between the first lobes and the second lobes throughout the rotation of the first and second gear elements, wherein the minimum gap distance prevents direct contact between the first and second lobes at any point during a pumping action, and wherein the paste material is guided through one or more nozzles of the extrusion printing system to facilitate the extrusion of the paste material.

12. The method according to claim 11, wherein the used paste material includes particles, and wherein the minimum gap distance is selected based on a size of the particles within the used paste material.

13. The method according to claim 11 or 12, wherein the minimum gap distance is chosen to be at least 3 times the 90th percentile of particle diameter in the used paste material (D90), and preferably at least 5 times.

14. A gear pump unit for use in an extrusion printing system according to any one of the preceding claims 1-10.
